# DEMANDE DE BREVET EUROPEEN

(11) **EP 4 717 558 A1**
(43) Date de publication de la demande: **01.04.2026**
(21) Numéro de dépôt: 25199927.2
(22) Date de dépôt: 03.09.2025
(51) Int. Cl.: B62D 1/02, B62D 15/02, B62D 1/04

(54) **SYSTÈME DE COMMANDE D'ORIENTATION AUTOMATIQUE DES ROUES D'UN VÉHICULE AUTOMOBILE EN FIN DE MANOEUVRE**

(30) Priorité: 30.09.2024 FR 2410440
(71) Demandeur: Stellantis Auto SAS, 78300 Poissy (FR); FCA US LLC, Auburn Hills, MI 48326-2766 (US)
(72) Inventeur: BAYARD, LOIC, 91470 FORGES LES BAINS (FR); POITEVIN, THOMAS, 91620 NOZAY (FR)
(74) Mandataire: ESIP

(57) **Abrégé**

Système de commande d'orientation automatique (SOA) d'au moins une roue directrice (RDR) d'un véhicule automobile (VHL) en fin de manœuvre du véhicule suivant une direction déterminée par rapport à l'axe longitudinal du véhicule, ledit système comportant un volant de direction (VDD) couplé à ladite roue via un dispositif de commande de direction assistée et pilotée (DAP) du véhicule ; ledit volant comportant au moins une zone de commande tactile (ZCC) agencée sur le volant de manière à délivrer un signal de commande au dispositif de commande de direction assistée et pilotée pour l'orientation automatique de la roue avec un angle de braquage déterminé, dans ladite direction déterminée, à la suite d'un double contact tactile sur ladite zone ; ledit signal de commande étant pris en compte à la suite d'une information de fin de manœuvre du véhicule délivrée par le véhicule.

## Description

L'invention concerne au général les systèmes de commande automatiques exploitant des interfaces homme machine, ou IHM, notamment celles équipant les volants de direction de véhicules automobiles, et concerne plus particulièrement un système de commande d'orientation automatique des roues d'un véhicule automobile en fin de manœuvre, exploitant des zones tactiles de commande agencées sur le volant de direction du véhicule ; chaque zone de commande tactile se rapportant à un angle de braquage déterminé à appliquer aux roues directrices du véhicule pour les orienter suivant une direction déterminée par rapport à l'axe longitudinal du véhicule.

Au sein d'un véhicule automobile, la fonction de direction est généralement assurée par la coopération d'un volant, d'une colonne de direction, d'un pignon, d'une crémaillère et d'une biellette, et agit sur les roues directrices du véhicule, qui sont le plus souvent les roues avant du véhicule.

Afin de réduire les efforts fournis par un conducteur au cours de manœuvres à faible vitesse de déplacement du véhicule, des dispositifs d'assistance ont été développés, notamment des dispositifs d'assistance électrique.

De tels dispositifs comprennent un moteur électrique interposé entre le volant et les roues directrices du véhicule apte à générer un couple pouvant se superposer aux couples appliqués sur le volant par le conducteur. Du fait de cette assistance électrique, l'effort à fournir par le conducteur pour braquer les roues directrices du véhicule est moins important. Le moteur électrique du dispositif de direction assistée peut être en outre piloté automatiquement pour se substituer au conducteur lors d'un stationnement en automatique, par exemple.

En fin de trajet, lorsque la manœuvre du véhicule est terminée, notamment en fin de manœuvre de stationnement, le conducteur peut vouloir avoir les roues avant de son véhicule orientées selon une direction parallèle à l'axe longitudinal du véhicule (volant de direction en position neutre).

Dans d'autre cas, notamment en cas de stationnement du véhicule dans une rue à forte pente, le conducteur peut désirer braquer les roues avant contre un trottoir, pour des raisons de sécurité.

Le conducteur doit alors manœuvrer lui-même (manuellement) le volant pour repositionner les roues directrices avec la direction souhaitée.

En outre, dans le cas de l'orientation des roues selon une direction parallèle à l'axe longitudinal du véhicule parallèle à l'axe longitudinal du véhicule (alignement des roues), une incertitude sur le bon alignement manuel des roues, demeure.

L'invention consiste à permettre au conducteur d'un véhicule équipé d'une direction assistée et pilotée de commander aisément et de manière intuitive un repositionnement automatique des roues directrices de son véhicule en fin de manœuvre avec une orientation déterminée conforme à l'orientation souhaitée par le conducteur.

A cet effet, l'invention a pour premier objet un système de commande d'orientation automatique d'au moins une roue directrice d'un véhicule automobile en fin de manœuvre du véhicule suivant une direction déterminée par rapport à l'axe longitudinal du véhicule ; ledit système comportant un volant de direction couplé à ladite roue via un dispositif de commande de direction assistée et pilotée du véhicule ; ledit volant comportant au moins une zone de commande tactile agencée sur le volant de manière à délivrer un signal de commande au dispositif de commande de direction assistée et pilotée pour l'orientation automatique de la roue avec un angle de braquage déterminé, dans ladite direction déterminée, à la suite d'un double contact tactile sur ladite zone ; ledit signal de commande étant pris en compte à la suite d'une détection d'une information de fin de manœuvre du véhicule délivrée par le véhicule.

Selon une caractéristique, la zone de commande tactile est activée et le signal de commande est pris en compte quand une information de vitesse nulle du véhicule est détectée à l'intérieur d'un intervalle de temps déterminé après un changement de sens de marche du véhicule.

Selon une autre caractéristique, le volant de direction comporte une jante et dans lequel une première zone de commande tactile est aménagée sur la jante selon une position déterminée sur la jante correspondant à une première direction d'orientation déterminée de la roue directrice.

Selon une autre caractéristique, la première zone de commande tactile est aménagée sur la jante dans la partie supérieure du volant, en étant centrée dans ladite partie supérieure, en considérant le volant dans une position angulaire du volant dite neutre ; un double contact sur la première zone de commande tactile pour cette position neutre étant apte à commander automatiquement l'orientation de la roue directrice selon une première direction d'orientation parallèle à l'axe longitudinal du véhicule correspondant à un angle de braquage de la roue nul.

Selon une autre caractéristique, une deuxième zone de commande est aménagée sur la jante à la gauche de la première zone de commande tactile et une troisième zone de commande tactile est aménagée sur la jante à la droite de la première zone de commande tactile ; les deuxième et troisième zones de commande tactile étant aptes à commander respectivement l'orientation de la roue dans des deuxième et troisième directions avec un angle de braquage maximal déterminé, respectivement à gauche et à droite de l'axe longitudinal du véhicule.

Selon une autre caractéristique, les angles de braquage à gauche ou à droite sont limités respectivement par des butées de direction à gauche ou à droite, ou par des couples résistifs déterminés créés par un obstacle fixe rencontré par la roue, avant d'atteindre les butées de direction, à gauche ou à droite.

Selon une autre caractéristique, le véhicule comporte deux roues directrices appartenant au même train avant du véhicule.

La présente invention a pour deuxième objet, un volant de direction d'un véhicule automobile destiné à un système tel que décrit ci-dessus, comportant une interface homme-machine constituée d'au moins une zone de commande tactile aménagée sur le volant pour la commande de l'orientation automatique d'au moins une roue directrice du véhicule.

La présente invention a pour troisième objet, un véhicule automobile comportant un système tel que décrit ci-dessus.

D'autres caractéristiques et avantages de l'invention apparaîtront à l'examen de la description détaillée ci-après, et du dessin annexé, sur lequel :
[Fig. 1] illustre schématiquement une première utilisation d'une interface de commande tactile d'un système selon l'invention ;
[Fig. 2] illustre schématiquement une deuxième utilisation de l'interface de commande tactile du système selon l'invention ; et
[Fig. 3] illustre schématiquement une troisième utilisation de l'interface de commande tactile du système selon l'invention.

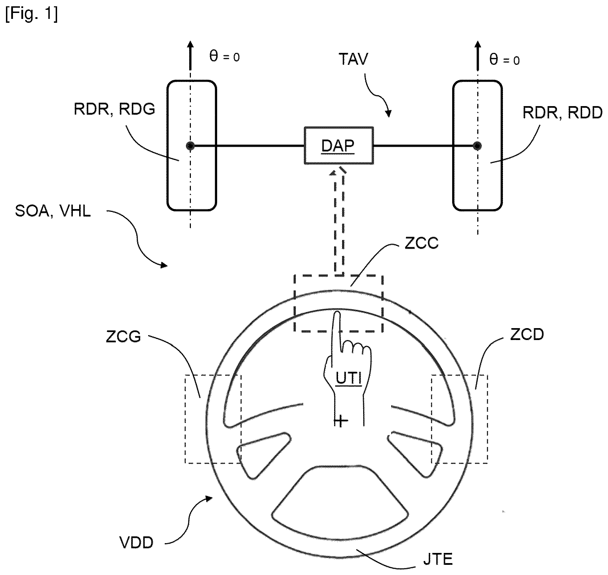

La figure 1 illustre schématiquement un mode de réalisation d'une interface de commande tactile d'un système SOA selon l'invention, comportant trois zones de commande tactile ZCC, ZCG et ZCD aménagées sur le volant de direction VDD d'un véhicule automobile VHL et qui fait office d'IHM immédiatement disponible (raccourci) et facilement accessible par le conducteur UTI en utilisant un ou plusieurs doigts, ici l'index de la main droite du conducteur UTI.

Dans ce mode de réalisation, les trois zones de commande tactile ZCC, ZCG et ZCD sont aménagées sur la jante JTE du volant de direction VDD, en regard de l'utilisateur : le conducteur UTI.

Une première zone de commande tactile ZCC est aménagée dans la partie supérieure de la jante JTE, sensiblement circulaire, en étant centrée dans la partie supérieure de la jante JTE et des deuxième et troisième zones ZCG et ZCD sont aménagées respectivement symétriquement sur la gauche et sur la droite de la première zone de commande tactile centrale ZCC, en considérant le volant VDD, comme illustré sur la figure, dans une position angulaire dite position angulaire « neutre ».

Dans le mode de réalisation considéré, les deuxième et troisième zones de commande tactiles ZCG et ZCD sont respectivement positionnées sensiblement à 90° à gauche et à droite de la première zone de commande tactile ZCC.

Chaque zone de commande tactile ZCC, ZCG et ZCD se rapporte à un angle de braquage déterminé à appliquer aux roues directrices RDR du véhicule VHL, notamment les roues avant gauche RDG et droite RDD d'un même train avant TAV du véhicule VHL, par un dispositif de direction assistée et pilotée DAP, couplé à la colonne de direction, non représentée, en considérant que le véhicule VHL dispose d'une direction mécanique.

Chaque zone de commande tactile ZCC, ZCG et ZCD est apte à délivrer un signal de commande à destination du dispositif de direction assistée et pilotée DAP qui, en réponse, applique l'angle de braquage aux roues directrices correspondant à la zone de commande tactile activée ZCC, ZCG ou ZCD.

Le dispositif de direction assistée et pilotée DAP considéré, comporte typiquement un moteur électrique, non représenté, qui est commandé par un calculateur de direction, également non représenté, pour fournir l'assistance (couple) nécessaire afin d'accompagner le conducteur UTI dans sa manœuvre de direction à basse vitesse. Le moteur électrique peut être également piloté pour se substituer au conducteur UTI pour certaines manœuvres notamment des manœuvres de stationnement automatique.

Dans une première utilisation de l'IHM de commande tactile, illustré à la figure 1, la première zone de commande tactile ZCC, aménagée dans la partie supérieure de la jante JTE, est activée tactilement par le conducteur UTI pour commander automatiquement un premier angle de braquage, dit angle de braquage « nul », θ = 0, à appliquer aux roues directrices RDR du véhicule VHL.

Par angle de braquage nul, on entend un angle de braquage à appliquer aux roues directrices RDR qui oriente automatiquement les roues directrices RDR dans une direction parallèle à l'axe longitudinal du véhicule VHL, non représenté. La position angulaire du volant VDD correspondant à ce premier angle de braquage « nul », θ = 0, est alors la position angulaire dite « neutre ». L'orientation de chacune des roues directrices gauche RDG et droite RDD est représentée sur la figure par une flèche, ici, parallèle à l'axe longitudinal du véhicule VHL.

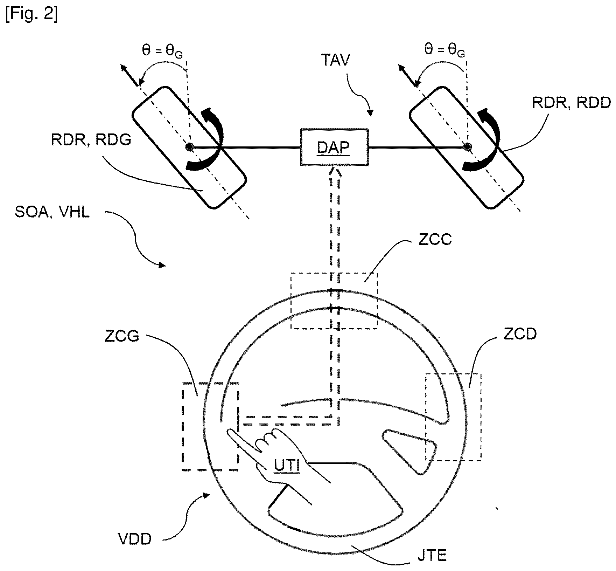

Dans une deuxième utilisation de l'IHM de commande tactile, illustrée à la figure 2, la deuxième zone de commande tactile ZCG, aménagée dans la partie gauche de la jante JTE du volant VDD, est activée tactilement par le conducteur UTI pour commander automatiquement un deuxième angle de braquage à appliquer aux roues RDR avec une deuxième orientation des roues directrices RDR correspondant à un angle de braquage maximal déterminé vers la gauche θ_{G} par apport à l'axe longitudinal du véhicule VHL.

L'angle de braquage θ_{G} de chacune des roues directrices gauche RDG et droite RDD est représenté sur la figure entre une flèche de direction et un axe parallèle à l'axe longitudinal du véhicule VHL.

Cet angle de braquage maximal θ_{G} peut correspondre à l'angle défini par la butée de direction à gauche, non représentée, ou bien correspondre à un obstacle fixe sur lequel viendrait buter la roue avant gauche RDG, au moment du braquage, par exemple un bord de trottoir, avant d'atteindre la butée de direction à gauche. Dans ce cas, c'est le couple résistif maximal créé par cet obstacle qui est détecté par le dispositif de direction assisté et piloté DAP et qui définit la butée maximale à gauche.

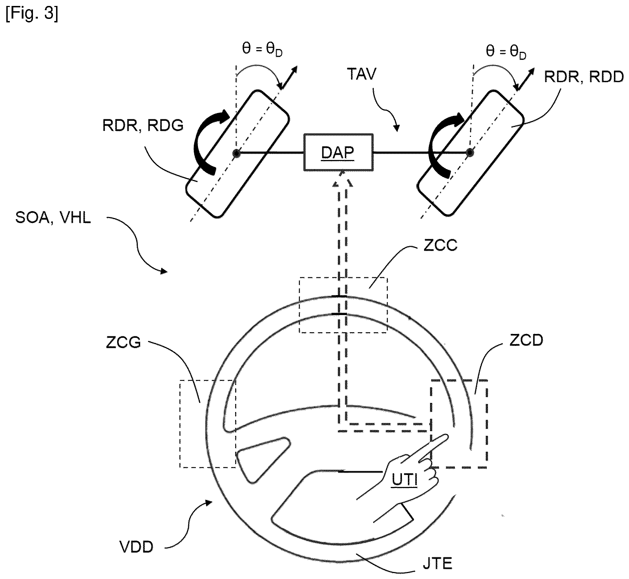

Et, dans une troisième utilisation de l'IHM de commande tactile, illustrée à la figure 3, la zone de commande tactile ZCD, aménagée dans la partie droite de la jante JTE, est activée tactilement par le conducteur UTI pour commander automatiquement un troisième angle de braquage à appliquer aux roues RDR avec une troisième orientation des roues directrices RDR correspondant à un angle de braquage maximal déterminé vers la droite θ_{D} par rapport à l'axe longitudinal du véhicule VHL.

L'angle de braquage θ_{D} de chacune des roues directrices gauche RDG et droite RDD est représenté sur la figure entre une flèche de direction et un axe parallèle à l'axe longitudinal du véhicule VHL.

Cet angle de braquage maximal θ_{D} peut correspondre à l'angle défini par la butée de direction à droite, non représentée, ou bien correspondre à un obstacle fixe sur lequel viendrait buter la roue avant droite RDD, au moment du braquage, par exemple un bord de trottoir, avant d'atteindre la butée de direction à droite. Dans ce cas, c'est le couple résistif maximal créé par cet obstacle qui est détecté par le dispositif de direction assisté et piloté DAP et qui définit la butée maximale à droite.

L'activation d'une des trois zones de commande tactile ZCC, ZCG ou ZCD sur la jante JTE du volant VDD, est avantageusement effectuée par un double contact, (deux contacts consécutifs réalisés dans un intervalle de temps déterminés de « X » ms), « X » étant paramétrable par le conducteur UTI ou par le constructeur automobile par défaut. Au-delà de cet intervalle de temps, les zones de commande tactile ZCC, ZCG ou ZCD sont inactives.

Par ailleurs, pour des raisons de sécurité, il est nécessaire d'empêcher tout risque de déclenchement intempestif du système SOA selon l'invention, en situation de roulage du véhicule VHL.

Pour cela, le système SOA conditionne l'activation des zones de commande tactiles ZCC, ZCG et ZCD dans des situations bien précises.

Ainsi, les zones de commande tactile ZCC, ZCG ou ZCD sont activées et le signal de commande est pris en compte quand une information de vitesse nulle du VHL véhicule est détectée à l'intérieur d'un intervalle de temps déterminé après un changement de sens de marche du véhicule VHL.

Par changement de sens de marche du véhicule VHL, on entend un sens de marche avant succédant immédiatement à un sens de marche arrière, ou inversement. Ce type de manœuvre traduit généralement une manœuvre du véhicule VHL pour son stationnement avant l'arrêt complet du véhicule VHL, arrêt qui se traduit par une vitesse nulle du véhicule VHL à l'intérieur de l'intervalle de temps déterminé après l'immobilisation du véhicule VHL.

Ainsi, lorsque le conducteur UTI du véhicule VHL a terminé sa manœuvre pour le stationnement du véhicule VHL, par exemple, le long d'un trottoir entre deux véhicules déjà en stationnement (créneau), et que le véhicule est immobile (vitesse nulle) depuis un temps déterminé, il peut commander le repositionnement automatique des roues directrices RDR de son véhicule VHL en effectuant un double contact, respectant un temps déterminé entre les deux contacts consécutifs, sur la zone de commande tactile centrale ZCC pour que les roues RDR se réalignent automatiquement parallèlement à l'axe longitudinal du véhicule VHL de manière à ne pas déborder sur la voie de circulation ou sur le trottoir.

Idem pour un stationnement du véhicule VHL sur un emplacement de parking délimité au sol, par une ligne blanche de part et d'autre de l'emplacement.

Ainsi, le système SOA selon l'invention permet grâce à une IHM tactile comportant au moins une zone de commande tactile ZCC, directement accessible sur le volant de direction VDD et intuitive, en coopération avec le dispositif de direction assistée et pilotée DAP du véhicule VHL, un repositionnement automatique des roues directrices RDR du véhicule VHL avec une orientation déterminée, sans action mécanique du conducteur UTI sur le volant VDD (sans rotation du volant VDD par le conducteur UTI).

Avantageusement, une IHM de commande tactile comportant trois zones de commande tactiles ZCC, ZCG et ZCD positionnées chacune angulairement sur le volant de direction VDD de manière intuitive pour évoquer respectivement trois orientations des roues directrices RDR, permet de couvrir un grand nombre de situations pour lesquelles un repositionnement des roues directrices RDR est recommandé.

Ainsi, la position angulaire de la première zone de commande tactile ZCC, centrée dans la partie supérieure du volant, évoque un angle braquage nul : θ = 0.

La position angulaire de la deuxième zone de commande tactile ZCG positionnée à 90°, à gauche de la position de la première zone de commande tactile ZCC, évoque un braquage à gauche : θ = θ_{G}.

Et, la position angulaire de la troisième zone de commande tactile ZCD positionnée à 90°, à droite de la position de la première zone de commande tactile ZCC, évoque un braquage à droite : θ = θ_{D}.

Les technologies concernant les zones de commande tactile et l'acquisition par double contact, ne font fait pas partie du périmètre de la présente invention et ne sont donc pas décrites.

## Revendications

1. Système de commande d'orientation automatique (SOA) d'au moins une roue directrice (RDR) d'un véhicule automobile (VHL) en fin de manœuvre du véhicule (VHL) suivant une direction déterminée par rapport à l'axe longitudinal du véhicule (VHL), ledit système (SOA) comportant un volant de direction (VDD) couplé à ladite roue (RDR) via un dispositif de commande de direction assistée et pilotée (DAP) du véhicule (VHL) ; ledit volant (VDD) comportant au moins une zone de commande tactile (ZCC) agencée sur le volant (VDD) de manière à délivrer un signal de commande au dispositif de commande de direction assistée et pilotée (DAP) pour l'orientation automatique de la roue (RDR) avec un angle de braquage déterminé, dans ladite direction déterminée, à la suite d'un double contact tactile sur ladite zone (ZCC) ; ledit signal de commande étant pris en compte à la suite d'une détection d'une information de fin de manœuvre du véhicule (VHL) délivrée par le véhicule (VHL).

2. Système (SOA) selon la revendication précédente, dans lequel la zone de commande tactile (ZCC) est activée et le signal de commande est pris en compte quand une information de vitesse nulle du véhicule (VHL) est détectée à l'intérieur d'un intervalle de temps déterminé après un changement de sens de marche du véhicule (VHL).

3. Système (SOA) selon l'une des revendications précédentes, dans lequel le volant de direction (VDD) comporte une jante (JTE) et dans lequel une première zone de commande tactile (ZCC) est aménagée sur la jante (JTE) selon une position déterminée sur la jante (JTE) correspondant à une première direction d'orientation déterminée de la roue directrice (RDR).

4. Système (SOA) selon la revendication précédente, dans lequel la première zone de commande tactile (ZCC) est aménagée sur la jante (JTE) dans la partie supérieure du volant (VDD), en étant centrée dans ladite partie supérieure, en considérant le volant (VDD) dans une position angulaire du volant dite neutre ; un double contact sur la première zone de commande tactile (ZCC) pour cette position neutre étant apte à commander automatiquement l'orientation de la roue directrice (RDR) selon une première direction d'orientation parallèle à l'axe longitudinal du véhicule (VHL) correspondant à un angle de braquage de la roue (RDR) nul.

5. Système (SOA) selon la revendication précédente, dans lequel une deuxième zone de commande (ZCG) est aménagée sur la jante (JTE) à la gauche de la première zone de commande tactile (ZCC) et une troisième zone de commande tactile (ZCD) est aménagée sur la jante (JTE) à la droite de la première zone de commande tactile (ZCC) ; les deuxième et troisième zones de commande tactile (ZCG, ZCD) étant aptes à commander respectivement l'orientation de la roue (RDR) dans des deuxième et troisième directions avec un angle de braquage maximal déterminé, respectivement à gauche et à droite de l'axe longitudinal du véhicule (VHL).

6. Système (SOA) selon la revendication précédente, dans lequel les angles de braquage à gauche ou à droite sont limités respectivement par des butées de direction à gauche ou à droite, ou par des couples résistifs déterminés créés par un obstacle fixe rencontré par la roue (RDR), avant d'atteindre les butées de direction, à gauche ou à droite.

7. Système (SOA) selon l'une quelconque des revendications précédentes, dans lequel le véhicule (VHL) comporte deux roues directrices (RDG, RDD) appartenant au même train avant (TAV) du véhicule (VHL).

8. Volant de direction (VDD) d'un véhicule automobile (VHL) destiné à un système (SOA) selon l'une quelconque des revendications précédentes, comportant une interface homme-machine constituée d'au moins une zone de commande tactile (ZCC) aménagée sur le volant (VDD) pour la commande de l'orientation automatique d'au moins une roue directrice (RDR) du véhicule (VHL).

9. Véhicule automobile (VHL) comportant un système (SOA) selon l'une quelconque des revendications 1 à 8.
